# EUROPÄISCHE PATENTSCHRIFT

(11) **EP 3 699 023 B1**
(45) Veröffentlichungstag und Bekanntmachung des Hinweises auf die Patenterteilung: **30.06.2021**
(21) Anmeldenummer: 20152120.0
(22) Anmeldetag: 16.01.2020
(51) Int. Cl.: B60N 2/07

(54) **FÜHRUNGSEINRICHTUNG ZUM FÜHREN EINER VERSTELLBEWEGUNG EINES FAHRZEUGSITZES**
GUIDING DEVICE FOR GUIDING AN ADJUSTING MOVEMENT OF A VEHICLE SEAT
DISPOSITIF DE GUIDAGE PERMETTANT DE GUIDER UN MOUVEMENT DE RÉGLAGE D'UN SIÈGE DE VÉHICULE

(30) Priorität: 22.02.2019 DE 102019104530
(43) Veröffentlichungstag der Anmeldung: 26.08.2020
(73) Patentinhaber: GRAMMER AG, 92289 Ursensollen (DE)
(72) Erfinder: Pelka, Joachim, 92224 Amberg (DE)
(74) Vertreter: Hannke, Christian

(56) Entgegenhaltungen:
- EP-A1- 2 196 354
- DE-A1-102014 108 226
- DE-U1-202016 001 836

## Beschreibung

Die Erfindung betrifft eine Führungseinrichtung zum Führen einer Verstellbewegung eines Fahrzeugsitzes gemäß dem Oberbegriff des Anspruchs 1. Eine solche Führungseinrichtung ist aus DE-A-20 2016 001836 bekannt.

Beispielsweise stellt diese Verstellbewegung die Verschiebung von zueinander mittels Schieneneinrichtungen gleit- oder kugelgelagerten Elementen, also beispielsweise eines oberen Sitzteils gegenüber einem unteren Sitzteil, eines oberen Armlehnenteils gegenüber einem unteren Armlehnenteil oder eines Kopfstützenteils gegenüber einer Rückenlehne, dar. Diese Führungseinrichtungen bieten dem Benutzer eines Fahrzeugsitzes die Möglichkeit, die Position des verschiebbaren Teils oder des gesamten Sitzes abhängig von der Größe des Benutzers, von dessen Verhältnis der Beinlänge zur Rumpflänge und von dessen persönlichem Komfortempfinden anzupassen, indem das Teil oder der Sitz ausgehend von einer Grundposition in eine erste Richtung, beispielsweise nach vorne, oder in eine zur ersten Richtung bevorzugt gegenläufige zweite Richtung, also beispielsweise nach hinten, in eine angepasste Position verschiebbar und arretierbar ist. Entsprechende Arretiereinrichtungen sind aus dem Stand der Technik bekannt und werden daher im Rahmen der vorliegenden Erfindung nicht näher erläutert.

Bekannte Schieneneinrichtungen weisen eine Führungsschieneneinrichtung und eine dazu verstellbare Gleitschieneneinrichtung auf. Ein erstes Standard-Anschlagelement der Führungsschieneneinrichtung bildet bei einer Maximalverschiebung der beiden Schieneneinrichtungen gegeneinander in die erste Verstellrichtung mit einem ersten Standard-Anschlagelement der Gleitschieneneinrichtung eine mechanische Wechselwirkung aus, so dass eine weitere Verschiebung in diese Richtung nicht möglich ist. Analog bildet ein zweites Standard-Anschlagelement der Führungsschieneneinrichtung bei einer Maximalverschiebung der beiden Schieneneinrichtungen gegeneinander in die zweite Verstellrichtung mit einem zweiten Standard-Anschlagelement der Gleitschieneneinrichtung eine mechanische Wechselwirkung aus, so dass eine weitere Verschiebung in diese Richtung ebenfalls nicht möglich ist.

Allerdings spielen neben den Proportionen des Fahrers und der gewünschten Bequemlichkeit auch die im Fahrzeug gegebenen Platzverhältnisse eine Rolle. So kann es zum Beispiel sein, dass ein Fahrzeugsitz durch eine maximale Verstellung nach vorne so weit vorne im Fahrzeug positioniert ist, dass ein sehr großer Fahrer mit seinen Knien am Lenkrad anstößt. Weiterhin ist es beispielsweise möglich, dass Bauteile eines derartigen Fahrzeugsitzes bei maximaler Verstellung nach hinten mit einer oder mehreren Scheiben des Fahrzeugs kollidieren. Dies ist insbesondere dann möglich, wenn die Fahrerkabine dieses Fahrzeugs sehr eng bemessen ist, wie zum Beispiel eine Fahrerkabine eines Baggers.

Es ist also sinnvoll, bei Fahrzeugsitzen den maximalen Verstellweg in die möglichen Verstellrichtungen individuell begrenzbar zu gestalten.

Gerade für die Schieneneinrichtungen werden im Fahrzeugbau jedoch oft Zukaufteile verwendet, die in hohen Stückzahlen produziert werden und dementsprechend günstig eingekauft werden können. Eine individuelle Änderung der Bauform oder der Gestaltung dieser Schieneneinrichtungen zur Sicherstellung der Begrenzung des Verstellwegs ist daher in der Kalkulation des Verkaufspreises nicht vorgesehen und würde den Fahrzeugsitz bzw. das Fahrzeug selbst über Gebühr verteuern.

Es ist also praktikabler, die Gestaltung der Verstelleinrichtung eines Fahrzeugsitzes, so dass der maximale Verstellweg in eine oder beide Richtungen individuell begrenzbar ausgestaltet ist, so vorzunehmen, dass für die Führungseinrichtung weiterhin eine Standardbaugruppe verwendet werden kann, die jedoch einfach durch geeignete Vorrichtungen ergänzt wird.

Hierzu ist aus dem Stand der Technik bekannt, ein Bauteil vorzusehen, welches in die Führungseinrichtung eingebaut wird und die Verschiebung in die erste Richtung begrenzt. Zusätzlich ist allerdings ein zweites Bauteil notwendig, welches ebenfalls in die Führungseinrichtung eingebaut wird und die Verschiebung in die zweite Richtung begrenzt. Es versteht sich, dass diese Lösung mit zwei Bauteilen mit einem hohen Montageaufwand einhergeht und daher die Kosten in die Höhe treibt.

Es ist daher Aufgabe vorliegender Erfindung, eine Führungseinrichtung zur Verfügung zu stellen, welche eine Möglichkeit aufweist, den maximalen Verstellweg beider Schieneneinrichtungen zueinander in beide Richtungen individuell zu begrenzen, und deren Vormontage einfach zu bewerkstelligen ist.

Diese Aufgabe wird gelöst gemäß den Merkmalen des Anspruches 1.

Es wird demnach eine Führungseinrichtung zum Führen einer Verstellbewegung eines Fahrzeugsitzes vorgeschlagen, umfassend eine Führungsschieneneinrichtung und eine dazu in eine Längsverstellrichtung der Führungseinrichtung verschiebbar angeordnete Gleitschieneneinrichtung, wobei die Gleitschieneneinrichtung ein erstes Anschlagelement und ein zweites Anschlagelement aufweist. Ferner ist ein einstückiges Bauteil zwischen der Gleitschieneneinrichtung und der Führungsschieneneinrichtung angeordnet, welches in Längsrichtung der Führungseinrichtung in einen ersten und einen zweiten Abschnitt unterteilt ist, wobei das Bauteil mittels zumindest eines im ersten Abschnitt angeordneten Verbindungselements fest mit der Führungsschieneneinrichtung verbunden ist. Erfindungsgemäß bildet der zweite Abschnitt des Bauteils an einem ersten Ende ein erstes Anschlagelement für eines der Anschlagelemente der Gleitschieneneinrichtung und an einem zweiten Ende ein zweites Anschlagelement für das andere der Anschlagelemente der Gleitschieneneinrichtung aus.

Bevorzugt handelt es sich bei der Führungsschieneneinrichtung und der dazugehörigen Gleitschieneneinrichtung um Kugelschieneneinrichtungen im Sinne von zueinander kugelgelagerten Linearschienen, so dass insgesamt eine Kugelschienenführungseinheit vorliegt. Diese Ausführungsform ist für eine reibungsarme Relativbewegung der beiden Schienen besonders geeignet.

Bevorzugt ist ein Rest der Führungseinrichtung auch ohne eingesetztes Bauteil bereits eine vollständige Baugruppe und/oder hinsichtlich der Relativbewegung der beiden Schieneneinrichtungen vollständig funktionsfähig. Das Bauteil ist somit bevorzugt nicht als Teil der Führungsschieneneinrichtung und/oder der Gleitschieneneinrichtung, sondern bevorzugt unabhängig davon ausgestaltet.

Durch das angeordnete Bauteil ist einerseits gewährleistet, dass weiterhin standardmäßig eingebaute Gleitschieneneinrichtungen und Führungsschieneneinrichtungen für die Führungseinrichtung verwendet werden können. Andererseits kann vorteilhaft das Bauteil nachgerüstet werden, so dass insbesondere dann, wenn ein Fahrerwechsel ansteht oder sich die Kundenwünsche nachträglich noch ändern, eine schnelle und kostengünstige Lösung zur Änderung der Begrenzung der Verstellwege bereitgestellt werden kann. Insbesondere ist das Bauteil nachträglich in den Rest der bereits fertig vormontierte Führungseinrichtung einsetzbar.

Bevorzugt ist das Bauteil so ausgestaltet, dass zum Einsetzen des Bauteils ("Einfädeln") in die Führungseinrichtung das Bauteil lediglich eine Translation in Längsrichtung der Führungseinrichtung sowie eine Rotation um eine Achse in Breitenrichtung der Führungseinrichtung erfährt.

Die Anschlagelemente der Gleitschieneneinrichtung stellen jedoch vorteilhaft nicht die Standard-Anschlagelemente dar, die ohne einsetzbares Bauteil im Zusammenspiel mit den Anschlagelementen der Führungsschieneneinrichtung für die Begrenzung der Verstellwege zuständig sind.

Zur besseren Unterscheidung werden in dem Fall, dass kein Bauteil in die Führungseinrichtung eingesetzt ist, die miteinander wechselwirkbaren Anschlagelemente von Gleitschieneneinrichtung und Führungsschieneneinrichtung als "Standard-Anschlagelemente" bezeichnet. Analog dazu werden in dem Fall, dass ein Bauteil in die Führungseinrichtung eingesetzt ist, die miteinander wechselwirkbaren Anschlagelemente von Gleitschieneneinrichtung und Bauteil als "Anschlagelemente" bezeichnet.

Vorteilhaft sind die mit den Anschlagelementen des Bauteils wechselwirkbaren Anschlagelemente der Gleitschieneneinrichtung ebenfalls Teil der Standard- Führungseinrichtung und beispielsweise als Teil von Schraubenverbindungen ausgestaltet. Die Schraubenverbindungen sind vorteilhaft zum Verbinden der Gleitschieneneinrichtung mit einem zu verschiebenden Oberteil bereitgestellt.

Gemäß einer bevorzugten Ausführungsform sind die Standard-Anschlagelemente der Gleitschieneneinrichtung und der Führungsschieneneinrichtung so angeordnet, dass sie in Breitenrichtung der Führungseinrichtung zentral oder beidseits symmetrisch zur Mittelachse der Führungseinrichtung angeordnet sind. Dies gewährleistet, dass die Schieneneinrichtungen beim Anschlag der Standard-Anschlagelemente sich nicht ohne Weiteres verkanten können.

Gleichzeitig ist von einer sicheren und mechanisch stabilen Führung und Begrenzung der Verstellwege auszugehen.

Dabei ist durch die Anordnung der Standard-Anschlagelemente gewährleistet, dass immer nur die gleichen Standard-Anschlagelemente miteinander wechselwirkbar sind. Betrachtet wird nun die Führungseinrichtung ohne einsetzbares Bauteil. Es ist also beispielsweise ausgeschlossen, dass ein Standard-Anschlagelement der Führungsschieneneinrichtung, das für die Begrenzung des Verstellwegs in die erste Richtung zuständig ist, mit einem Standard-Anschlagelement der Gleitschieneneinrichtung, das für die Begrenzung des Verstellwegs in die zweite Richtung zuständig ist, wechselwirkt. Das gleiche gilt natürlich für den umgekehrten Fall. Alle zur Führungseinrichtung gehörenden Standard-Anschlagelemente sind also bevorzugt in Längsrichtung der Führungseinrichtung gesehen hintereinander angeordnet.

Beispielsweise sind in Längsrichtung der Führungseinrichtung betrachtet die Standard-Anschlagelemente der Führungsschieneneinrichtung, die den Verstellweg in die erste Richtung begrenzen, in einem ersten Endbereich der Führungsschieneneinrichtung angeordnet, wohingegen beispielsweise die Standard-Anschlagelemente, die den Verstellweg in die zweite Richtung begrenzen, in einem zweiten Endbereich der Führungsschieneneinrichtung angeordnet sind.

Analog dazu sind in Längsrichtung der Führungseinrichtung betrachtet die Standard-Anschlagelemente der Gleitschieneneinrichtung, die den Verstellweg in die erste Richtung begrenzen, in einem ersten mittleren Bereich angeordnet, wohingegen beispielsweise die Standard-Anschlagelemente, die den Verstellweg in die zweite Richtung begrenzen, in einem zweiten mittleren Bereich angeordnet sind.

Dabei sind die zur Führungsschieneneinrichtung gehörenden Standard-Anschlagelemente aus dem ersten Endbereich mit den zur Gleitschieneneinrichtung gehörenden Standard-Anschlagelementen aus dem ersten mittleren Bereich wechselwirkbar. Analog dazu sind die zur Führungsschieneneinrichtung gehörenden Standard-Anschlagelemente aus dem zweiten Endbereich mit den zur Gleitschieneneinrichtung gehörenden Standard-Anschlagelementen aus dem zweiten mittleren Bereich wechselwirkbar; zumindest dann, wenn kein Bauteil gemäß Anspruch 1 eingesetzt ist.

Das angeordnete Bauteil übernimmt also die Begrenzung des Verstellwegs in die erste Richtung und gleichzeitig in die zweite Richtung. Zudem kann es über das Verbindungselement im ersten Abschnitt, welches als Teil des Bauteils, beispielsweise als Aussparung des Bauteils und bevorzugt als Durchgangsbohrung, ausgestaltet ist, mechanisch sicher in die Führungsschiene eingebaut werden.

Im Sinne der vorliegenden Erfindung sind die Anschlagelemente der Gleitschieneneinrichtung bevorzugt als mechanische Stoppelemente ausgebildet, welche in einen Einbauraum, welcher bevorzugt als Zwischenraum zwischen einem Gleitschienenelement der Gleitschieneneinrichtung und einem Führungsschienenelement der Führungsschieneneinrichtung ausgestaltet ist, hineinragend angeordnet sind.

Bevorzugt umfasst das Bauteil genau einen ersten Abschnitt und genau einen zweiten Abschnitt. Bevorzugt ist das Bauteil ansonsten frei von weiteren Abschnitten.

Gemäß einer bevorzugten Ausführungsform weist das Bauteil genau eine Spiegelsymmetrieebene auf, welche bevorzugt parallel zur Längsrichtung der Führungseinrichtung angeordnet ist. Das Bauteil ist also einfach gestaltet; seine Montage innerhalb der Führungseinrichtung kann intuitiv gelingen, da die Anordnung der Spiegelsymmetrieebene in Relation zur Längsrichtung der Führungseinrichtung selbsterklärend ist. Außerdem ist durch die Spiegelsymmetrieebene und deren Anordnung parallel zur Längsrichtung der Führungseinrichtung gewährleistet, dass es zwei Möglichkeiten gibt, das Bauteil einzubauen. Diese beiden Möglichkeiten und die daraus resultierenden Einbauzustände werden nachfolgend noch genauer erläutert.

Bevorzugt ist eine Längsrichtung des Bauteils zumindest in einem, bevorzugt in beiden seiner in die Führungseinrichtung eingebauten Zustände parallel zur Längsrichtung der Führungseinrichtung angeordnet. Gleiches gilt bevorzugt für eine Breitenrichtung des Bauteils in Bezug auf die Breitenrichtung der Führungseinrichtung sowie für eine Höhenrichtung des Bauteils in Bezug auf die Höhenrichtung der Führungseinrichtung. Bevorzugt ist das Bauteil hinsichtlich einer Breitenrichtung der Führungseinrichtung mittig angeordnet, so dass es mittig zur Breite der Führungsschieneneinrichtung, des Führungsschienenelements, der Gleitschieneneinrichtung und/oder des Gleitschienenelements angeordnet ist.

Außerdem ist es bevorzugt, wenn das Bauteil insgesamt eine einfache Gestaltung aufweist. So ist es beispielsweise bevorzugt, dass das Bauteil über seine gesamte Länge und/oder Breite eine homogene Dicke aufweist. Es kann außerdem vorgesehen sein, dass der erste Abschnitt des Bauteils in Längsrichtung gesehen linear ausgestaltet ist.

Denkbar ist natürlich, dass verschiedene Bauteile bereitgestellt werden, welche sich hinsichtlich der Länge des ersten und/oder des zweiten Abschnitts unterscheiden. Je nach Kundenwunsch wird dann das passende Bauteil ausgesucht und eingesetzt.

Ferner kann vorgesehen sein, dass der zweite Abschnitt des Bauteils, welcher bevorzugt unmittelbar benachbart zum ersten Abschnitt angeordnet ist, eine U-Form aufweist. Bevorzugt ist diese U-Form in Bezug auf die Längsrichtung des Bauteils ausgestaltet.

Bevorzugt erstreckt sich die Länge des Bauteils in Längsrichtung des Bauteils. Bevorzugt erstreckt sich die Breite des Bauteils in Breitenrichtung des Bauteils. Bevorzugt erstreckt sich die Dicke des Bauteils zumindest abschnittsweise in Höhenrichtung des Bauteils.

Unter "U-Form" wird im Rahmen der vorliegenden Erfindung verstanden, dass das Element, hier der zweite Abschnitt, einen zentralen linearen Anteil aufweist, und dass unmittelbar benachbart zum zentralen Anteil zwei dazu senkrecht verlaufende Anteile angeordnet sind.

Gegebenenfalls kann der zweite Abschnitt gerundete Abschnitte aufweisen, welche die Ecken der U-Form und/oder die Verbindungsstelle zum ersten Abschnitt hin ausbilden.

Bevorzugt bilden jeweils ein senkrechter Anteil oder ein gerundeter Anteil oder jeweils ein senkrechter Anteil zusammen mit jeweils einem gerundeten Anteil jeweils ein Anschlagelement des zweiten Abschnitts des Bauteils aus.

Das Bauteil kann insbesondere als ein Blechteil ausgestaltet sein, dessen Fertigung hinsichtlich der Formgebung lediglich das Anfertigen des Zuschnitts aus einer Blechtafel sowie das Abkanten des Zuschnitts umfasst. Danach sind noch oberflächenbehandelnde oder -veredelnde Schritte wie Verzinken oder Pulverbeschichten möglich.

Das Bauteil weist also bevorzugt lediglich zueinander abgekantete Laschen ("Abkantungen"), bevorzugt lediglich vier, als Fertigungselemente auf. Das Bauteil ist also bevorzugt frei von weiteren Fertigungselementen wie Falzen, Umschlägen, Stehfalzen, Sicken, Kiemen, Gewindebohrungen, Schweißnähten und/oder Tiefziehkörpern.

Um die Kosten weiter zu senken, ist es vorteilhaft, wenn mittels eines einzelnen Bauteils pro Führungseinrichtung insgesamt zwei verschieden große Begrenzungen des Verstellwegs realisierbar sind.

Gemäß einer weiteren bevorzugten Ausführungsform ist demnach vorgesehen, dass die Längsverstellrichtung der Führungseinrichtung eine Richtung nach vorne und/oder eine Richtung nach hinten ist. Bevorzugt gibt es mindestens einen ersten und mindestens einen zweiten Einbauzustand des Bauteils. Beispielsweise ist gemäß dem ersten Einbauzustand in Bezug auf die Längsverstellrichtung nach vorne der erste Abschnitt des Bauteils vor dem zweiten Abschnitt angeordnet. Beispielsweise ist gemäß dem zweiten Einbauzustand in Bezug auf die Längsverstellrichtung nach vorne der erste Abschnitt des Bauteils hinter dem zweiten Abschnitt angeordnet.

Es versteht sich, dass "vorne" und "hinten" Richtungen darstellen, welche auf die Führungseinrichtung bezogen sind. Diese Richtungen können auch den Richtungen des gesamten Sitzes oder eines Sitzoberteils entsprechen, müssen es jedoch nicht.

Das Bauteil kann also hinsichtlich der Längsverstellrichtung der Führungseinrichtung zwei Orientierungen aufweisen, welche zueinander um 180° gedreht sind. Bevorzugt sind die Orientierungen zueinander um 180° bezüglich einer Achse in Höhenrichtung der Führungseinrichtung gedreht. Die Relativposition des zweiten Abschnitts des Bauteils zum Rest der Führungseinrichtung und somit zu den Anschlagelementen unterscheidet sich bevorzugt vom ersten zum zweiten Einbauzustand. Damit ist es möglich, zwei unterschiedlich große Verstellwege mit einem einzelnen Bauteil je Führungseinrichtung zu realisieren.

Es ist vorteilhaft, wenn die Position des Bauteils in jedem Einbauzustand zumindest stufenbehaftet nochmals verstellbar ist, um weitere Verstellmöglichkeiten zu realisieren. Beispielsweise ist es bevorzugt, dass das Bauteil im ersten Abschnitt mindestens eine, bevorzugt mehrere Aussparungen aufweist, wobei es mittels mindestens einer der Aussparungen mit mindestens einem Befestigungselement der Führungsschieneneinrichtung verbindbar ist. Beispielsweise sind diese Aussparungen in Längsrichtung des Bauteils aufeinanderfolgend angeordnet. Der Abstand zwischen den Aussparungen kann dabei jeweils identisch oder unterschiedlich sein.

Bevorzugt ist das Bauteil gemäß beiden Einbauzuständen in die Führungsschieneneinrichtung einbaubar, wobei pro Einbauzustand für die Ausbildung des Verbindungselements zur Führungsschieneneinrichtung zwischen einer oder mehreren, bevorzugt zwischen allen Aussparungen des Bauteils gewählt werden kann.

Es ist ferner vorteilhaft, wenn die Position des Bauteils in jedem Einbauzustand stufenlos verstellbar ist. Es ist beispielsweise denkbar, dass zumindest eine der Aussparungen als Langloch ausgebildet ist.

Bevorzugt ist das Bauteil abgesehen von der oder den Aussparungen des ersten Abschnitts ansonsten frei von weiteren Aussparungen. Dies erhöht die Stabilität des Bauteils.

Bevorzugt ist die Breite des Bauteils so ausgestaltet, dass sie sich über seine Länge und/oder Höhe nicht oder lediglich im ersten Abschnitt ändert. Um für die Montage des Bauteils innerhalb der Führungseinrichtung und das Anbringen der dafür vorgesehenen Aussparung genügend Platz ("Fleisch") bereitzustellen und gleichzeitig für eine Leichtbauweise des Bauteils zu sorgen, kann es vorteilhaft sein, wenn das Bauteil im ersten Abschnitt eine sich in Richtung zum zweiten Abschnitt hin verjüngende Breite aufweist. Bevorzugt ist die oder sind die Aussparungen in einem breiteren Teil des ersten Abschnitts und/oder nicht im schmaleren Teil des ersten Abschnitts angeordnet.

Ferner kann es vorteilhaft sein, wenn das Bauteil im zweiten Abschnitt eine homogene Breite aufweist. Ferner kann es vorteilhaft sein, wenn das Bauteil im zweiten Abschnitt einen sich gegenüber der restlichen Breite des zweiten Abschnitts verbreiternden Endabschnitt aufweist. Damit wird die Stabilität des Bauteils erhöht.

Um eine sichere Montage des Bauteils innerhalb der Führungsschieneneinrichtung und gleichzeitig die ungehinderte Verschiebung der Gleitschieneneinrichtung relativ zur Führungsschieneneinrichtung zu gewährleisten, ist es bevorzugt, dass das Bauteil unmittelbar kontaktierend zu einem Führungsschienenelement der Führungsschieneneinrichtung und/oder beabstandet zu einem Gleitschienenelement der Gleitschieneneinrichtung ausgebildet ist. Es ist bevorzugt, dass die Anschlagelemente der Gleitschieneneinrichtung die einzigen Elemente der Führungseinrichtung sind, mit denen die Anschlagelemente des Bauteils bei einer Verstellung der Gleitschieneneinrichtung relativ zur Führungsschieneneinrichtung wechselwirkbar sind.

Eine derartige Führungseinrichtung könnte an einem Fahrzeugsitz und/oder innerhalb eines Fahrzeugs beispielsweise so angeordnet sein, dass die Längsverstellrichtung der Führungseinrichtung parallel zu einer Längsrichtung des Fahrzeugsitzes und/oder des Unterteils des Fahrzeugsitzes anordenbar ist, und dass die Führungsschieneneinrichtung mit dem Unterteil des Fahrzeugsitzes und die Gleitschieneneinrichtung mit einem Oberteil des Fahrzeugsitzes fest verbindbar sind.

Weitere Vorteile, Ziele und Eigenschaften vorliegender Erfindung werden anhand anliegender Zeichnung und nachfolgender Beschreibung erläutert, in welchen beispielhaft Ausführungsformen des verwendeten Bauteils und der erfindungsgemäßen Führungseinrichtung dargestellt und beschrieben ist. In der Zeichnung zeigen:
- Figur 1a-c: schematisch mehrere Ansichten eines Bauteils zum Einsetzen in einer Führungseinrichtung gemäß einer ersten Ausführungsform;
- Figur 1d: schematisch eine Ansicht einer erfindungsgemäßen Führungseinrichtung mit eingesetztem Bauteil;
- Figur 2a-c: verschiedene Stadien eines Montagevorgangs des Bauteils aus der Figur 1a in eine Führungseinrichtung, so dass das Bauteil gemäß einem ersten Einbauzustand montiert ist;
- Figur 3a-c: verschiedene Stadien eines Montagevorgangs des Bauteils aus der Figur 1a in eine Führungseinrichtung, so dass das Bauteil gemäß einem zweiten Einbauzustand montiert ist;
- Figur 4a: eine schräge Ansicht der Baugruppe gemäß der Fig. 2c;
- Figur 4b: eine schräge Ansicht der Baugruppe gemäß der Fig. 3c;
- Fig. 5a: eine Ansicht von vorne von Teilen eines Fahrzeugsitzes mit einer erfindungsgemäßen Führungseinrichtung;
- Fig. 5b: eine vergrößerte Ansicht gemäß Fig. 5a.

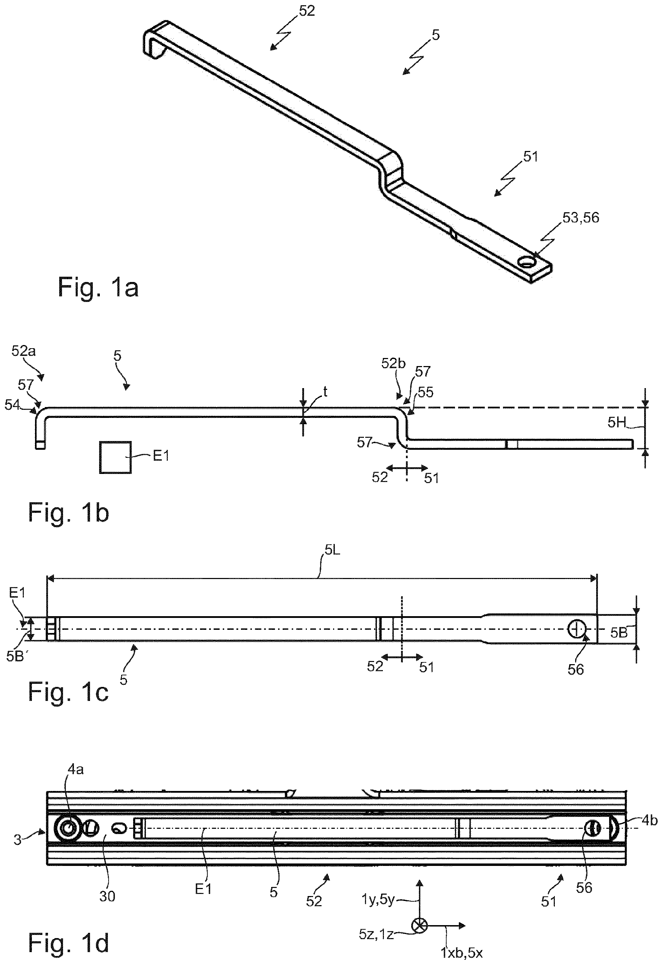

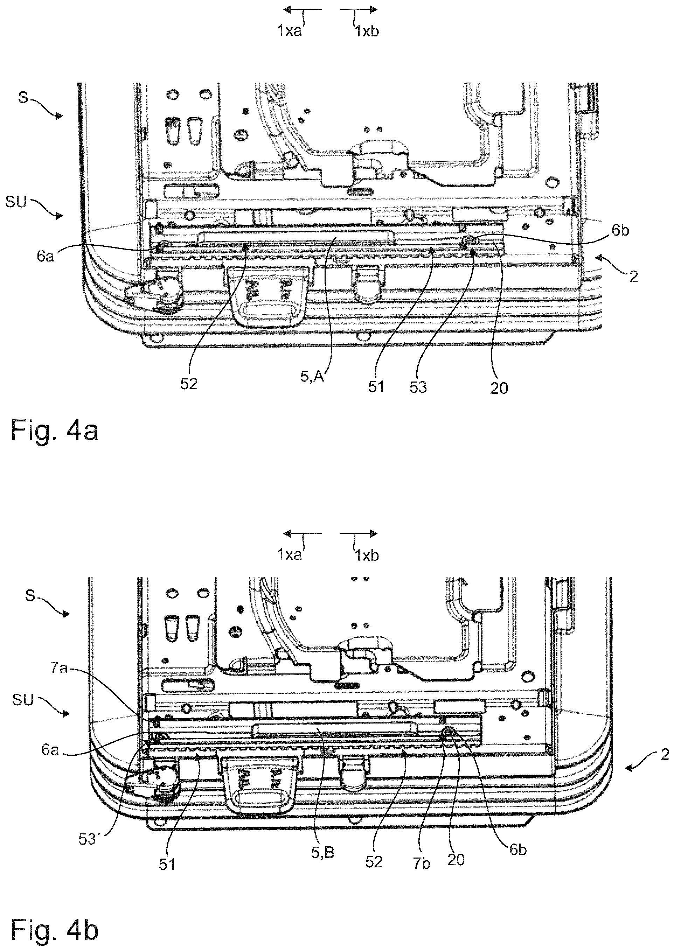

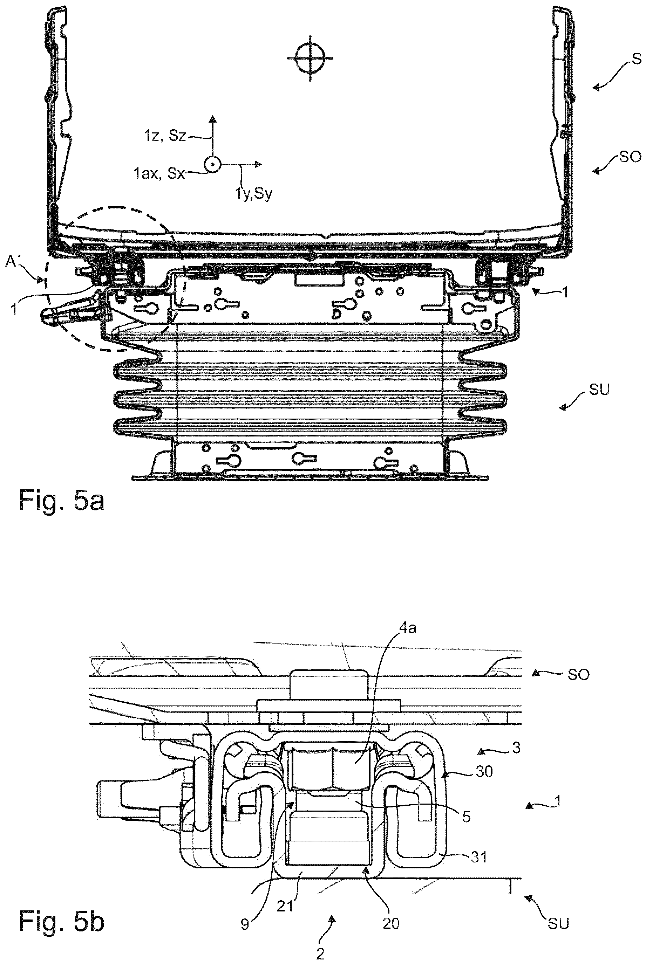

Es sei erwähnt, dass zur besseren Übersichtlichkeit bei den Figuren Teile weggelassen wurden. So zeigen beispielsweise die Figuren 4a und 4b nur ein Unterteil SU eines Fahrzeugsitzes S und die Figur 5a nicht den gesamten Fahrzeugsitz S, sondern nur Teile davon. Die Figur 1d zeigt nur Teile der Führungseinrichtung 1 und insbesondere nicht die Führungsschieneneinrichtung 2 der Führungseinrichtung 1.

Die Erfindung wird im Folgenden anhand einer Führungseinrichtung 1 zum Führen einer Verstellbewegung eines Fahrzeugsitzes S beschrieben, wobei die Verstellbewegung beispielhaft die Verschiebung eines oberen Sitzteils SO gegenüber einem unteren Sitzteil SU darstellt. Dazu ist wie abgebildet vorliegend das obere Sitzteil SO mit der Gleitschieneneinrichtung 3 und das untere Sitzteil SU mit der Führungsschieneneinrichtung 2 fest verbunden.

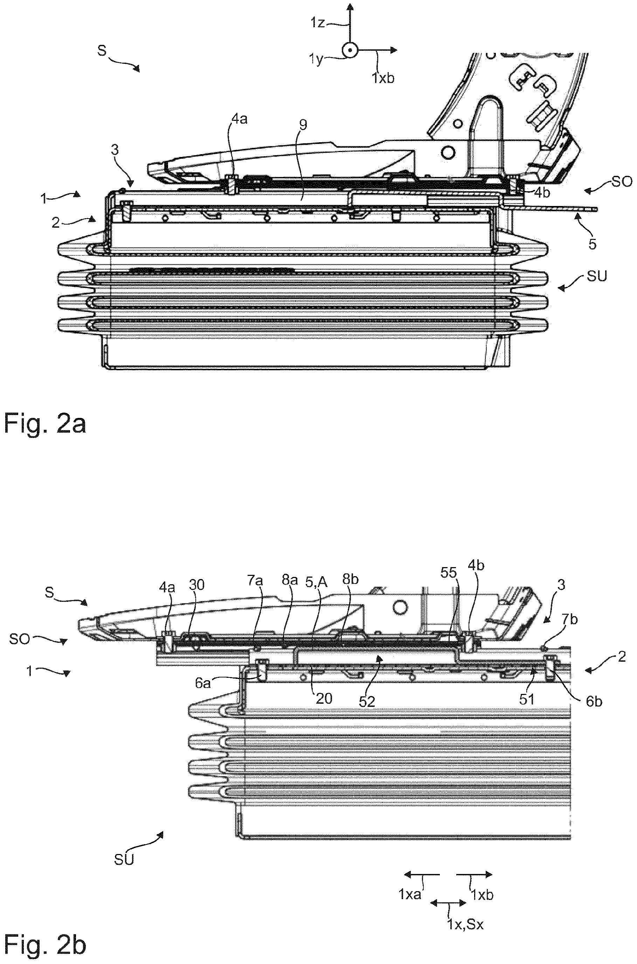

Gezeigt sind beispielsweise anhand der Figuren 2a-c, 3a-c und 5a, 5b Teile eines Fahrzeugsitzes S, wobei eine Führungseinrichtung 1 mit der Führungsschieneneinrichtung 2 und der dazu verstellbaren Gleitschieneneinrichtung 3 dargestellt ist.

Ein Koordinatensystem in der Figur 5a verdeutlicht die Orientierung der Längsrichtung 1xa der Führungseinrichtung 1 nach vorne, der Breitenrichtung 1y der Führungseinrichtung 1 nach rechts sowie der Höhenrichtung 1z der Führungseinrichtung 1 nach oben. Vorliegend ist die Führungseinrichtung 1 innerhalb des Fahrzeugsitzes S so angeordnet, dass die Längsrichtung 1xa der Führungseinrichtung 1 der Sitzlängsrichtung Sx, die Breitenrichtung 1y der Führungseinrichtung 1 der Sitzbreitenrichtung Sy und die Höhenrichtung 1z der Sitzhöhenrichtung Sz entsprechen.

Gemäß Fig. 5a und 5b ist die Gleitschieneneinrichtung 3 in einer Grundstellung angeordnet, gemäß welcher die Gleitschieneneinrichtung 3 und die Führungsschieneneinrichtung 2 zueinander nicht verschoben angeordnet sind. Insbesondere sind gemäß dieser Grundstellung gleich orientierte Stirnflächen des Gleitschienenelements 30 und des Führungsschienenelements 20 in Bezug auf die Längsrichtung 1x der Führungseinrichtung 1 an der gleichen Position angeordnet. Fig. 5b zeigt dabei eine Vergrößerung eines Ausschnitts A' gemäß Fig. 5a.

Ein erstes Standard-Anschlagelement 7a der Führungsschieneneinrichtung 2 bildet bei einer Maximalverschiebung der beiden Schieneneinrichtungen 2, 3 gegeneinander in die erste Verstellrichtung 1xa mit einem ersten Standard-Anschlagelement 8a der Gleitschieneneinrichtung 3 eine mechanische Wechselwirkung aus, so dass eine weitere Verschiebung in diese Richtung 1xa nicht möglich ist. Dieser Fall gilt, wenn kein Bauteil 5 in die Führungseinrichtung 1 eingesetzt ist.

Analog bildet ein zweites Standard-Anschlagelement 7b der Führungsschieneneinrichtung 2 bei einer Maximalverschiebung der beiden Schieneneinrichtungen 2, 3 gegeneinander in die zweite Verstellrichtung 1xb mit einem zweiten Standard-Anschlagelement 8b der Gleitschieneneinrichtung 3 eine mechanische Wechselwirkung aus, so dass eine weitere Verschiebung in diese Richtung 1xb ebenfalls nicht möglich ist. Vorliegend sind die Standard-Anschlagelemente 7a, 7b, 8a, 8b jeweils als "Nasen", also als umgekantete Laschen eines Führungsschienenelements 20 der Führungsschieneneinrichtung 2 und eines Gleitschienenelements 30 der Gleitschieneneinrichtung 3 ausgestaltet. Dieser Fall gilt ebenfalls dann, wenn kein Bauteil 5 in die Führungseinrichtung 1 eingesetzt ist.

Gezeigt ist insbesondere gemäß der Figur 2b eine Führungseinrichtung 1 zum Führen einer Verstellbewegung eines Fahrzeugsitzes S, umfassend eine Führungsschieneneinrichtung 2 und eine dazu in eine Längsverstellrichtung 1x der Führungseinrichtung 1 verschiebbar angeordnete Gleitschieneneinrichtung 3, wobei die Gleitschieneneinrichtung 3 ein erstes Anschlagelement 4a und ein zweites Anschlagelement 4b aufweist. Ebenfalls ist ein einstückiges Bauteil 5 zwischen der Gleitschieneneinrichtung 3 und der Führungsschieneneinrichtung 2 angeordnet, welches in Längsrichtung 1x der Führungseinrichtung 1, welche vorliegend der Längsrichtung des Bauteils 5 entspricht, in einen ersten 51 und einen zweiten Abschnitt 52 unterteilt ist. Das Bauteil 5 ist mittels eines im ersten Abschnitt 51 angeordneten Verbindungselements 53 fest mit der Führungsschieneneinrichtung 2, vorliegend mittels des Befestigungselements 6b der Führungsschieneneinrichtung 2, verbunden.

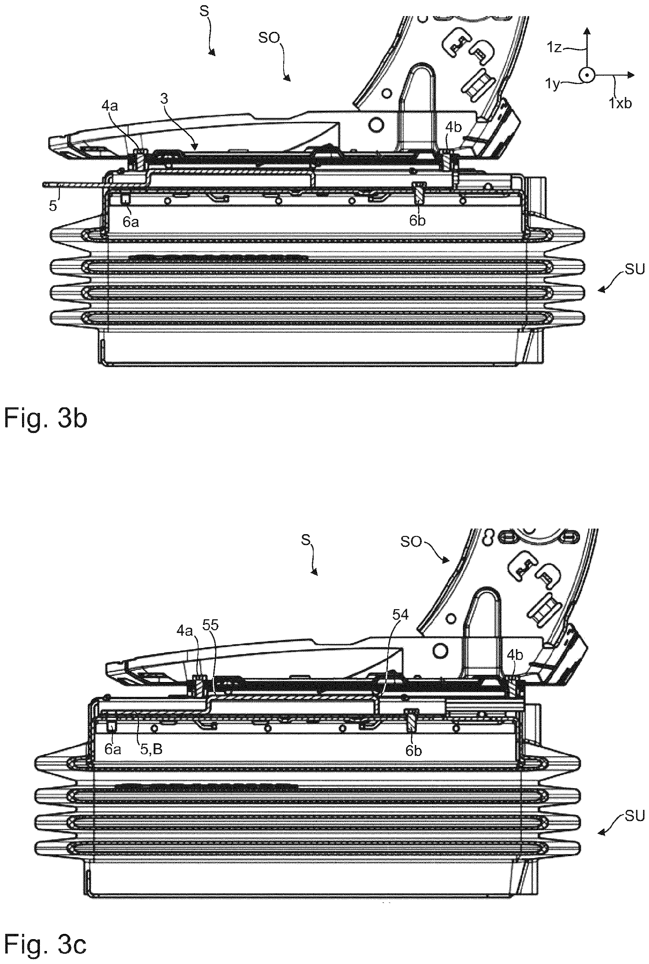

Dabei bildet der zweite Abschnitt 52 des Bauteils 5 an einem ersten Ende 52a ein erstes Anschlagelement 54 für das erste Anschlagelement 4a der Gleitschieneneinrichtung 3 und an einem zweiten Ende 52b ein zweites Anschlagelement 55 für das zweite Anschlagelement 4b der Gleitschieneneinrichtung 3 aus. Gemäß der Figur 3c bildet der zweite Abschnitt 52 des Bauteils 5 am ersten Ende 52a ein erstes Anschlagelement 54 für das zweite Anschlagelement 4b der Gleitschieneneinrichtung 3 und an einem zweiten Ende 52b ein zweites Anschlagelement 55 für das erste Anschlagelement 4a der Gleitschieneneinrichtung 3 aus.

Das Bauteil 5 ist vorliegend nicht als Teil der Führungsschieneneinrichtung 2 und/oder der Gleitschieneneinrichtung 3, sondern unabhängig davon ausgestaltet. Gemäß der Fig. 1d ist ein Blick von unten, also parallel zur Höhenrichtung 1z, auf die Führungseinrichtung 1 dargestellt, wobei zur besseren Übersichtlichkeit die Führungsschieneneinrichtung 2 ausgeblendet ist. Vorliegend ist das Bauteil 5 hinsichtlich einer Breitenrichtung 1y der Führungseinrichtung 1 mittig angeordnet, so dass es mittig zur Breite der Führungsschieneneinrichtung 2, des Führungsschienenelements 20, der Gleitschieneneinrichtung 3 und des Gleitschienenelements 30 angeordnet ist.

Vorliegend ist das Bauteil 5 so ausgestaltet, dass zum Einsetzen des Bauteils 5 ("Einfädeln") in die Führungseinrichtung 1 das Bauteil 5 lediglich eine Translation in Längsrichtung 1x der Führungseinrichtung 1 sowie eine Rotation um eine Achse in Breitenrichtung 1y der Führungseinrichtung 1 erfährt.

Die Figuren 2a-c zeigen verschiedene Schritte in chronologischer Reihenfolge des Einfädelns des Bauteils 5 in den Rest der Führungseinrichtung 1, so dass das Bauteil 5 gemäß einem ersten Einbauzustand A eingebaut ist.

Gemäß Fig. 2a ist ein erster Schritt des Einfädelns zu sehen. Demnach ist die Gleitschieneneinrichtung 3 und mit ihr das obere Sitzteil SO maximal gegenüber der Führungsschieneneinrichtung 2 und dem unteren Sitzteil SU nach hinten 1xb verschoben. So ist gewährleistet, dass das hintere Anschlagelement 4b der Gleitschieneneinrichtung 3 beim Einfädeln des Bauteils 5 nicht mit dem Bauteil 5 kollidiert. Das Bauteil 5 wird nun von der hinteren Sitzseite aus in Längsrichtung nach vorne 1xa mit dem zweiten Abschnitt 52 zuerst in den Einbauraum 9 geschoben.

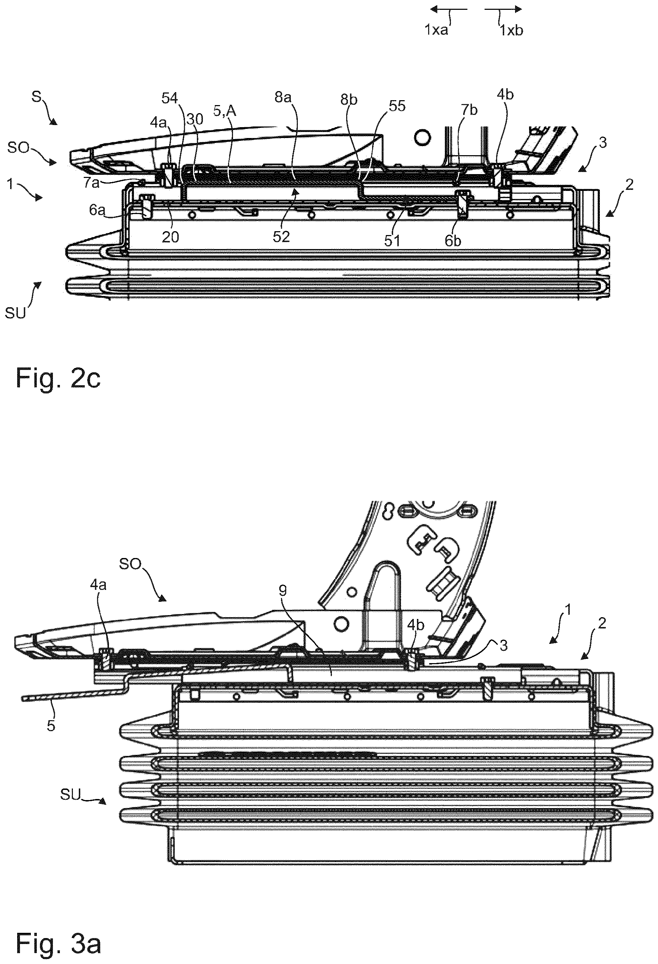

Gemäß Fig. 2b hat das Bauteil 5 bereits seine angedachte Position innerhalb des Rests der Führungseinrichtung 1 erreicht. Die Gleitschieneneinrichtung 3 wird nun maximal nach vorne 1xa verschoben, damit der zum Befestigen des Bauteils 5 innerhalb des Rests der Führungseinrichtung 1 notwendige Zugang zum Befestigungselement 6b der Führungsschieneneinrichtung 2 gewährleistet wird. Mittels des Befestigungselements 6b und des Verbindungselements 53 wird das Bauteil 5 über die Führungsschieneneinrichtung 2 an dem unteren Sitzteil SU befestigt. Die Fig. 2c zeigt den Zustand, gemäß welchem die Führungseinrichtung 1 komplett ist und die Montage des Bauteils 5 beendet ist.

Mittels des gezeigten Bauteils 5 sind allerdings insgesamt zwei verschieden große Begrenzungen des Verstellwegs realisierbar.

Vorliegend kann die Längsverstellrichtung 1x der Führungseinrichtung 1 eine Richtung nach vorne 1xa und eine Richtung nach hinten 1xb sein. Es gibt mindestens einen ersten A und mindestens einen zweiten Einbauzustand B des Bauteils 5. So zeigen die Figuren 2a-c den ersten Einbauzustand A, gemäß welchem in Bezug auf die Längsverstellrichtung 1x nach vorne 1ax der erste Abschnitt 51 des Bauteils 5 vor dem zweiten Abschnitt 52 angeordnet ist. Außerdem zeigen die Figuren 3a-c den zweiten Einbauzustand B, gemäß welchem in Bezug auf die Längsverstellrichtung 1x nach vorne 1ax der erste Abschnitt 51 des Bauteils 5 hinter dem zweiten Abschnitt 52 angeordnet ist.

Die Figuren 3a-c zeigen verschiedene Schritte in chronologischer Reihenfolge des Einfädelns des Bauteils 5 in den Rest der Führungseinrichtung 1, so dass das Bauteil 5 gemäß einem zweiten Einbauzustand B eingebaut ist.

Gemäß Fig. 3a ist ein erster Schritt des Einfädelns zu sehen. Demnach ist die Gleitschieneneinrichtung 3 und mit ihr das obere Sitzteil SO maximal gegenüber der Führungsschieneneinrichtung 2 und dem unteren Sitzteil SU nach vorne 1xa verschoben. So ist gewährleistet, dass das vordere Anschlagelement 4a der Gleitschieneneinrichtung 3 beim Einfädeln des Bauteils 5 nicht mit dem Bauteil 5 kollidiert. Das Bauteil 5 wird nun von der vorderen Sitzseite aus in Längsrichtung nach hinten 1xb mit dem zweiten Abschnitt 52 zuerst in den Einbauraum 9 geschoben.

Gemäß Fig. 3c hat das Bauteil 5 bereits seine angedachte Position innerhalb des Rests der Führungseinrichtung 1 erreicht. Die Gleitschieneneinrichtung 3 wird nun maximal nach hinten 1xb verschoben, damit der zum Befestigen des Bauteils 5 innerhalb des Rests der Führungseinrichtung 1 notwendige Zugang zum Befestigungselement 6a der Führungsschieneneinrichtung 2 gewährleistet wird. Mittels des Befestigungselements 6a (wovon hier Teile, nämlich die Schraube des Befestigungselements 6a, ausgeblendet sind; gezeigt ist nur die Bohrung des Befestigungselements 6a) und des Verbindungselements 53 wird das Bauteil 5 über die Führungsschieneneinrichtung 2 an dem unteren Sitzteil SU befestigt.

Vorliegend sind die mit den Anschlagelementen 54, 55 des Bauteils 5 wechselwirkbaren Anschlagelemente 4a, 4b der Gleitschieneneinrichtung 3 ebenfalls Teil der Standard-Führungsschiene und beispielsweise als Teil von Schraubenverbindungen, vorliegend als Sechskantmuttern, ausgestaltet. Diese Schraubenverbindungen sind vorliegend zum Verbinden der Gleitschieneneinrichtung 3 mit einem zu verschiebenden Oberteil, hier dem oberen Sitzteil SO, bereitgestellt.

Vorliegend sind die Anschlagelemente 4a, 4b der Gleitschieneneinrichtung 3 als mechanische Stoppelemente ausgebildet, welche in einen Einbauraum 9 (siehe Fig. 5b), welcher vorliegend als Zwischenraum zwischen dem Gleitschienenelement 30 der Gleitschieneneinrichtung 3 und einem Führungsschienenelement 20 der Führungsschieneneinrichtung 2 ausgestaltet ist, hineinragend angeordnet sind.

Vorliegend umfasst das Bauteil 5 genau einen ersten Abschnitt 51 und genau einen zweiten Abschnitt 52 und ist ansonsten frei von weiteren Abschnitten.

Die Figuren 1b, 1c und 1d zeigen außerdem, dass das Bauteil 5 vorliegend genau eine Spiegelsymmetrieebene E1 aufweist, welche parallel zur Längsrichtung 1x der Führungseinrichtung 1 angeordnet ist. Vorliegend ist eine Längsrichtung 5x des Bauteils 5 parallel zur Längsrichtung 1x der Führungseinrichtung 1 angeordnet. Gleiches gilt vorliegend für eine Breitenrichtung 5y des Bauteils 5 in Bezug auf die Breitenrichtung 1y der Führungseinrichtung 1 sowie für eine Höhenrichtung 5z des Bauteils 5 in Bezug auf die Höhenrichtung 1z der Führungseinrichtung 1.

Außerdem ist gezeigt, dass das Bauteil 5 über seine gesamte Länge 5L und Breite 5B eine homogene Dicke t aufweist. Vorliegend erstreckt sich die Länge 5L des Bauteils 5 in Längsrichtung 5x des Bauteils 5. Vorliegend erstreckt sich die Breite 5B des Bauteils 5 in Breitenrichtung 5y des Bauteils 5. Vorliegend erstreckt sich die Dicke t des Bauteils 5 zumindest abschnittsweise in Höhenrichtung 5z des Bauteils 5.

Gezeigt ist, dass der erste Abschnitt 51 des Bauteils 5 in Längsrichtung 5x, 1x gesehen linear ausgestaltet ist. Ferner ist gezeigt, dass der zweite Abschnitt 52 des Bauteils 5, welcher vorliegend unmittelbar benachbart zum ersten Abschnitt 51 angeordnet ist, eine U-Form aufweist, welche in Bezug auf die Längsrichtung 5x des Bauteils 5 ausgestaltet ist.

Vorliegend weist der zweite Abschnitt 52 insgesamt drei gerundete Anteile 57 auf, welche die Ecken der U-Form ausbilden. Einer der gerundeten Anteile 57 ist unmittelbar benachbart zum ersten Abschnitt 51 angeordnet und bildet die Verbindungsstelle zum ersten Abschnitt 51 hin aus.

Vorliegend bildet jeweils ein gerundeter Anteil 57 jeweils ein Anschlagelement 54 oder 55 des zweiten Abschnitts 52 des Bauteils 5 aus.

Das Bauteil 5 ist vorliegend als ein Blechteil ausgestaltet, dessen Fertigung hinsichtlich der Formgebung lediglich das Anfertigen des Zuschnitts aus einer Blechtafel sowie das Abkanten des Zuschnitts umfasst. Danach sind noch oberflächenbehandelnde oder -veredelnde Schritte wie Verzinken oder Pulverbeschichten möglich.

Das Bauteil 5 weist vorliegend lediglich vier zueinander abgekantete Laschen als Fertigungselemente auf. Das Bauteil 5 ist also vorliegend frei von weiteren Fertigungselementen wie Falzen, Umschlägen, Stehfalzen, Sicken, Kiemen, Gewindebohrungen, Schweißnähten und/oder Tiefziehkörpern. Vorliegend ist das Bauteil 5 abgesehen von der Aussparung 56 des ersten Abschnitts 51 ansonsten frei von weiteren Aussparungen.

Vorliegend ist die Breite 5B des Bauteils 5 so ausgestaltet, dass sie sich über seine Länge 5L und seine Höhe 5H lediglich im ersten Abschnitt 51 ändert; vorliegend von der maximalen Breite 5B auf die verringerte Breite 5B'. Es ist somit gezeigt, dass das Bauteil 5 im ersten Abschnitt 51 eine sich in Richtung zum zweiten Abschnitt 52 hin verjüngende Breite 5B, 5B' aufweist. Vorliegend ist die Aussparung 56 in einem breiteren Teil des ersten Abschnitts 51 und nicht im schmaleren Teil des ersten Abschnitts 51 angeordnet. Ferner ist gezeigt, dass das Bauteil 5 im zweiten Abschnitt 52 eine homogene Breite 5B' aufweist.

Gemäß den Figuren 2b, 2c, 3b und 3c ist außerdem gezeigt, dass das Bauteil 5 unmittelbar kontaktierend zu einem Führungsschienenelement 20 der Führungsschieneneinrichtung 2 und beabstandet zu einem Gleitschienenelement 30 der Gleitschieneneinrichtung 3 ausgebildet ist. Vorliegend sind die Anschlagelemente 4a, 4b der Gleitschieneneinrichtung 3 die einzigen Elemente der Führungseinrichtung 1, mit denen die Anschlagelemente 54, 55 des Bauteils 5 bei einer Verstellung der Gleitschieneneinrichtung 3 relativ zur Führungsschieneneinrichtung 2 wechselwirken.

Dabei zeigt die Fig. 2c beispielsweise einen Zustand kurz vor dem ersten Anschlagzustand, gemäß welchem das erste Anschlagelement 4a der Gleitschieneneinrichtung 3 mit dem erstten Anschlagelement 54 des Bauteils 5 zum Anschlag kommt, also mechanisch wechselwirkt. Ferner zeigt die Fig. 2b beispielsweise einen zweiten Anschlagzustand, gemäß welchem das zweite Anschlagelement 4b der Gleitschieneneinrichtung 3 mit dem zweiten Anschlagelement 55 des Bauteils 5 zum Anschlag kommt, also mechanisch wechselwirkt.

Es versteht sich, dass es sich bei dem vorstehend erläuterten Ausführungsbeispiel lediglich um eine erste Ausgestaltung der erfindungsgemäßen Führungseinrichtung handelt. Insofern beschränkt sich die Ausgestaltung der Erfindung nicht auf dieses Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Führungseinrichtung
- 1x, 5x, Sx: Längsrichtung
- 1xa: Richtung nach vorne
- 1xb: Richtung nach hinten
- 1y, 5y, Sy: Breitenrichtung
- 1z, 5z, Sz: Höhenrichtung
- 2: Führungsschieneneinrichtung
- 3: Gleitschieneneinrichtung
- 4a, 4b, 54, 55: Anschlagelement
- 5: Bauteil
- 5B, 5B': Breite
- 5H: Höhe
- 5L: Länge
- 6a, 6b: Befestigungselement
- 7a, 7b, 8a, 8b: Standard-Anschlagelemente
- 9: Einbauraum
- 20: Führungsschienenelement
- 21, 31: Stirnfläche
- 30: Gleitschienenelement
- 51, 52: Abschnitt
- 52a, 52b: Ende
- 53: Verbindungselement
- 56: Aussparung
- A, B: Einbauzustand
- E1: Spiegelsymmetrieebene
- S: Fahrzeugsitz
- SO: Oberteil
- SU: Unterteil
- t: Dicke

## Patentansprüche

1. Führungseinrichtung (1) zum Führen einer Verstellbewegung eines Fahrzeugsitzes (S), umfassend eine Führungsschieneneinrichtung (2) und eine dazu in eine Längsverstellrichtung (1x) der Führungseinrichtung (1) verschiebbar angeordnete Gleitschieneneinrichtung (3), wobei die Gleitschieneneinrichtung (3) ein erstes Anschlagelement (4a) und ein zweites Anschlagelement (4b) aufweist, wobei ein einstückiges Bauteil (5) zwischen der Gleitschieneneinrichtung (3) und der Führungsschieneneinrichtung (2) angeordnet ist, welches in Längsrichtung (1x) der Führungseinrichtung (1) in einen ersten (51) und einen zweiten Abschnitt (52) unterteilt ist, wobei das Bauteil (5) mittels zumindest eines im ersten Abschnitt (51) angeordneten Verbindungselements (53) fest mit der Führungsschieneneinrichtung (2) verbunden ist,
**dadurch gekennzeichnet, dass**
der zweite Abschnitt (52) des Bauteils (5) an einem ersten Ende (52a) ein erstes Anschlagelement (54) für eines der Anschlagelemente (4a, 4b) der Gleitschieneneinrichtung (3) und an einem zweiten Ende (52b) ein zweites Anschlagelement (55) für das andere der Anschlagelemente (4a, 4b) der Gleitschieneneinrichtung (3) ausbildet.

2. Führungseinrichtung (1) nach Anspruch 1,
**dadurch gekennzeichnet, dass**
das Bauteil (5) genau eine Spiegelsymmetrieebene (E1) aufweist, welche parallel zur Längsrichtung (1x) der Führungseinrichtung (1) angeordnet ist.

3. Führungseinrichtung (1) nach einem der vorhergehenden Ansprüche,
**dadurch gekennzeichnet, dass**
das Bauteil (5) über seine gesamte Länge (5L) und/oder Breite (5B) eine homogene Dicke (t) aufweist und/oder
dass der erste Abschnitt (51) des Bauteils (5) in Längsrichtung (1x) gesehen linear ausgestaltet ist und/oder
dass der zweite Abschnitt (52) des Bauteils (5), welcher bevorzugt unmittelbar benachbart zum ersten Abschnitt (51) angeordnet ist, eine U-Form aufweist.

4. Führungseinrichtung (1) nach einem der vorhergehenden Ansprüche,
**dadurch gekennzeichnet, dass**
die Längsverstellrichtung (1x) der Führungseinrichtung (1) eine Richtung nach vorne (1xa) und/oder eine Richtung nach hinten (1xb) ist, wobei es mindestens einen ersten (A) und mindestens einen zweiten Einbauzustand (B) des Bauteils (5) gibt, wobei gemäß dem ersten Einbauzustand (A) in Bezug auf die Längsverstellrichtung (1x) nach vorne (1ax) der erste Abschnitt (51) des Bauteils (5) vor dem zweiten Abschnitt (52) angeordnet ist, und wobei gemäß dem zweiten Einbauzustand (B) in Bezug auf die Längsverstellrichtung (1x) nach vorne (1ax) der erste Abschnitt (51) des Bauteils (5) hinter dem zweiten Abschnitt (52) angeordnet ist.

5. Führungseinrichtung (1) nach einem der vorhergehenden Ansprüche,
**dadurch gekennzeichnet, dass**
das Bauteil (5) im ersten Abschnitt (51) mindestens eine, bevorzugt mehrere Aussparungen (56) aufweist, wobei es mittels mindestens einer der Aussparungen (56) mit mindestens einem Befestigungselement (6a, 6b) der Führungsschieneneinrichtung (2) verbindbar ist.

6. Führungseinrichtung (1) nach einem der vorhergehenden Ansprüche,
**dadurch gekennzeichnet, dass**
das Bauteil (5) im ersten Abschnitt eine sich in Richtung zum zweiten Abschnitt (52) hin verjüngende Breite (b) aufweist, und/oder
dass das Bauteil (5) im zweiten Abschnitt (52) eine homogene Breite (b) aufweist.

7. Führungseinrichtung (1) nach einem der vorhergehenden Ansprüche,
**dadurch gekennzeichnet, dass**
das Bauteil (5) unmittelbar kontaktierend zu einem Führungsschienenelement (20) der Führungsschieneneinrichtung (2) und beabstandet zu einem Gleitschienenelement (30) der Gleitschieneneinrichtung (3) ausgebildet ist.

8. Führungseinrichtung (1) nach einem der vorhergehenden Ansprüche,
**dadurch gekennzeichnet, dass**
die Längsverstellrichtung (1x) der Führungseinrichtung (1) parallel zu einer Längsrichtung (Sx) des Fahrzeugsitzes (S) anordenbar ist, und dass die Führungsschieneneinrichtung (2) mit einem Unterteil (SU) des Fahrzeugsitzes (S) und die Gleitschieneneinrichtung (3) mit einem Oberteil (SO) des Fahrzeugsitzes (S) fest verbindbar sind.

## Claims

1. Guiding device (1) for guiding an adjustment movement of a vehicle seat (S), comprising a guide rail device (2) and a slide rail device (3) arranged displaceably thereto in a longitudinal adjustment direction (1x) of the guiding device (1), the slide rail device (3) having a first stop element (4a) and a second stop element (4b), a one-piece component (5) being arranged between the slide rail device (3) and the guide rail device (2), and divided in the longitudinal direction (1x) of the guiding device (1) into a first (51) and a second section (52), the component (5) being fixedly connected to the guide rail device (2) by means of at least one connection element (53) arranged in the first section (51),
**characterised in that**
the second section (52) of the component (5) at a first end (52a) forms a first stop element (54) for one of the stop elements (4a, 4b) of the slide rail device (3) and at a second end (52b) forms a second stop element (55) for the other of the stop elements (4a, 4b) of the slide rail device (3).

2. Guiding device (1) according to claim 1,
**characterised in that**
the component (5) has exactly one mirror symmetry plane (E1) which is arranged parallel to the longitudinal direction (1x) of the guiding device (1).

3. Guiding device (1) according to one of the preceding claims,
**characterised in that**
the component (5) has a homogeneous thickness (t) over its entire length (5L) and/or width (5B) and/or
that the first section (51) of the component (5) as seen in the longitudinal direction (1x) is linear and/or
that the second section (52) of the component (5), which is preferably arranged directly adjacent to the first section (51), has a U shape.

4. Guiding device (1) according to one of the preceding claims,
**characterised in that**
the longitudinal adjustment direction (1x) of the guiding device (1) is a direction towards the front (1xa) and/or a direction towards the rear (1xb), wherein there is at least a first (A) and at least a second installation state (B) of the component (5),
wherein according to the first installation state (A) with respect to the longitudinal adjustment direction (1x) towards the front (1ax) the first section (51) of the component (5) is arranged in front of the second section (52), and according to the second installation state (B) with respect to the longitudinal adjustment direction (1x) to the front (1ax) the first section (51) of the component (5) is arranged behind the second section (52).

5. Guiding device (1) according to one of the preceding claims,
**characterised in that**
the component (5) in the first section (51) has at least one, preferably a plurality of recesses (56), wherein it can be connected to at least one fastening element (6a, 6b) of the guide rail device (2) by means of at least one of the recesses (56).

6. Guiding device (1) according to one of the preceding claims,
**characterised in that**
the component (5) in the first section has a width (b) which tapers towards the second section (52), and/or
that the component (5) has a homogeneous width (b) in the second section (52).

7. Guiding device (1) according to one of the preceding claims,
**characterised in that**
the component (5) is formed in direct contact with a guide rail element (20) of the guide rail device (2) and is spaced apart from a slide rail element (30) of the slide rail device (3).

8. Guiding device (1) according to one of the preceding claims,
**characterised in that**
the longitudinal adjustment direction (1x) of the guiding device (1) can be arranged parallel to a longitudinal direction (Sx) of the vehicle seat (S), and that the guide rail device (2) can be firmly connected to a lower part (SU) of the vehicle seat (S) and the slide rail device (3) can be firmly connected to an upper part (SO) of the vehicle seat (S).

## Revendications

1. Dispositif de guidage (1) pour le guidage d'un mouvement de réglage d'un siège de véhicule (S), comportant un dispositif de rail de guidage (2) et un dispositif de glissière (3) disposé apte à se déplacer par rapport à celui-ci dans une direction de réglage longitudinale (1x) du dispositif de guidage (1), le dispositif de glissière (3) présentant un premier élément de butée (4a) et un second élément de butée (4b), un composant d'une seule pièce (5) étant disposé entre le dispositif de glissière (3) et le dispositif de rail de guidage (2), lequel composant d'une seule pièce (5) est divisé dans la direction longitudinale (1x) du dispositif de guidage (1) en une première (51) et une seconde (52) section, le composant (5) étant relié de façon fixe au dispositif de rail de guidage (2) au moyen d'au moins un élément de liaison (53) disposé dans la première section (51),
**caractérisé par le fait que**
la seconde section (52) du composant (5) à une première extrémité (52a) forme un premier élément de butée (54) pour l'un des éléments de butée (4a, 4b) du dispositif de glissière (3) et à une seconde extrémité (52b) forme un second élément de butée (55) pour l'autre des éléments de butée (4a, 4b) du dispositif de glissière (3).

2. Dispositif de guidage (1) selon la revendication 1,
**caractérisé par le fait que**
le composant (5) présente exactement un plan de symétrie miroir (E1), lequel est disposé parallèlement à la direction longitudinale (1x) du dispositif de guidage (1).

3. Dispositif de guidage (1) selon l'une des revendications précédentes,
**caractérisé par le fait que**
le composant (5) présente une épaisseur homogène (t) sur toute sa longueur (5L) et/ou largeur (5B) et/ou
**par le fait que** la première section (51) du composant (5) telle que vue dans la direction longitudinale (1x) est réalisée linéaire et/ou
**par le fait que** la seconde section (52) du composant (5), laquelle est disposée de préférence directement adjacente à la première section (51), présente une forme de U.

4. Dispositif de guidage (1) selon l'une des revendications précédentes,
**caractérisé par le fait que**
la direction de réglage longitudinale (1x) du dispositif de guidage (1) est une direction vers l'avant (1xa) et/ou une direction vers l'arrière (1xb), où il y a au moins un premier (A) et au moins un second état de montage (B) du composant (5), la première section (51) du composant (5) étant disposée devant la seconde section (52) selon le premier état de montage (A) par rapport à la direction de réglage longitudinale (1x) vers l'avant (1xa), et la première section (51) du composant (5) étant disposée derrière la seconde section (52) selon le second état de montage (B) par rapport à la direction de réglage longitudinale (1x) vers l'avant (1xa).

5. Dispositif de guidage (1) selon l'une des revendications précédentes,
**caractérisé par le fait que**
le composant (5) dans la première section (51) présente au moins un, de préférence plusieurs renfoncements (56), où il peut être relié à au moins un élément de fixation (6a, 6b) du dispositif de rail de guidage (2) au moyen d'au moins l'un des renfoncements (56).

6. Dispositif de guidage (1) selon l'une des revendications précédentes,
**caractérisé par le fait que**
le composant (5) présente dans la première section une largeur (b) s'effilant en direction de la seconde section (52), et/ou
**par le fait que** le composant (5) présente dans la seconde section (52) une largeur homogène (b).

7. Dispositif de guidage (1) selon l'une des revendications précédentes,
**caractérisé par le fait que**
le composant (5) est formé directement en contact avec un élément de rail de guidage (20) du dispositif de rail de guidage (2) et espacé d'un élément de glissière (30) du dispositif de glissière (3).

8. Dispositif de guidage (1) selon l'une des revendications précédentes,
**caractérisé par le fait que**
la direction de réglage longitudinale (1x) du dispositif de guidage (1) est apte à être disposée parallèlement à une direction longitudinale (Sx) du siège de véhicule (S), et **par le fait que** le dispositif de rail de guidage (2) est apte à être relié de manière fixe à une partie inférieure (SU) du siège de véhicule (S) et le dispositif de glissière (3) est apte à être relié de manière fixe à une partie supérieure (SO) du siège de véhicule (S).
